(19) Europäisches Patentamt
European Patent Office
Office européen des brevets

(11) EP 2 470 388 B1

(12) **FASCICULE DE BREVET EUROPEEN**

(45) Date de publication et mention de la délivrance du brevet:
**14.06.2017 Bulletin 2017/24**

(21) Numéro de dépôt: **10742182.8**

(22) Date de dépôt: **02.07.2010**

(51) Int Cl.:
***B60H 1/32*** *(2006.01)*

(86) Numéro de dépôt international:
**PCT/FR2010/051397**

(87) Numéro de publication internationale:
**WO 2011/023870 (03.03.2011 Gazette 2011/09)**

(54) **CLIMATISATION AVEC ESTIMATEUR EMBARQUE DE PUISSANCE D'UN COMPRESSEUR**

KLIMAANLAGE MIT EINGEBETTETEM KOMPRESSORLEISTUNGSSCHÄTZER

AIR CONDITIONING DEVICE WITH EMBEDDED COMPRESSOR OUTPUT ESTIMATOR

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **25.08.2009 FR 0955793**

(43) Date de publication de la demande:
**04.07.2012 Bulletin 2012/27**

(73) Titulaire: **Peugeot Citroën Automobiles SA**
**78140 Vélizy-Villacoublay (FR)**

(72) Inventeur: **BRUNIQUEL, Guillaume**
**F-75013 Paris (FR)**

(56) Documents cités:
**EP-A- 1 808 318**
**JP-A- 2009 107 419**
**US-A- 5 285 649**
**US-A1- 2008 209 929**
**US-B1- 6 226 585**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 470 388 B1

## Description

L'invention concerne une climatisation de véhicule, avec un circuit de fluide frigorigène comprenant au moins un organe de compression pour mettre le fluide frigorigène en circulation et pour mettre le fluide dans le circuit sous pression et un organe de condensation permettant le transfert de fluide frigorigène d'une phase gazeuse vers une phase liquide.

Dans des véhicules contemporains un système de climatisation lorsqu'il est en état de fonctionnement, est un consommateur d'énergie. La plus part de cette énergie nécessaire à maintenir l'habitacle d'un véhicule à une certaine température, est prélevée directement sur l'arbre moteur du véhicule. Pour celui-ci, il est prévu un embrayage permettant la connexion physique entre l'arbre du moteur et le compresseur. Ce compresseur est donc entraîné par l'arbre moteur et permet de mettre en circulation un fluide frigorigène, source de production de froid pour le système de climatisation. L'une des conséquences est que ce compresseur prélève de la puissance sur l'arbre moteur. Comme nous l'avons appris en physique, cette puissance correspond à un couple qui représente une résistance pour le moteur du véhicule.

Ce couple résistant est susceptible de perturber la mise à disposition du couple moteur sur la chaîne de traction de la voiture et d'entraîner des pertes de confort de conduite ou même, dans le pire des cas, de faire caler le moteur.

Pour éviter ces problèmes, des essais ont été faits pour calculer le couple créé par le compresseur sur l'arbre moteur afin d'estimer la résistance supplémentaire sur le moteur. Par exemple la demande de brevet US 5, 285,649 propose de calculer la puissance absorbée par un compresseur à partir d'une mesure de température du réfrigérant au niveau du condenseur pour calculer le débit de réfrigérant. Cette méthode utilise pour le calcul un débit réfrigérant à partir du régime de rotation du compresseur et la différence entre la température extérieure de l'air et la température d'un réfrigérant dans le condenseur. Un désavantage de cette méthode est le fait qu'elle est peu précise et ne tient pas compte de la vitesse de l'air passant par le condenseur. Cette approximation avec son niveau de précision bas est inappropriée pour l'utilisation pendant des phases d'enclenchement de l'embrayage. Dans des phases de connexion du compresseur avec le moteur du véhicule, des à-coups sont transmis dans l'habitacle de la voiture, de sorte qu'il en résulte une diminution de confort. L'amélioration des prestations relative à l'agrément du véhicule est d'autant plus nette que la précision de cet estimateur est grande. JP 2009 107419 divulgue un système selon le préambule de la revendication 1. C'est un but de l'invention de proposer une climatisation pour un véhicule permettant de meilleurs résultats en termes de confort, notamment en optimisant le calcul de l'estimation de puissance consommée ou le couple créé par le compresseur de la climatisation.

L'invention propose à cet effet une climatisation de véhicule, avec un circuit de fluide frigorigène comprenant au moins un organe de compression pour mettre le fluide frigorigène en circulation et/ou pour mettre le fluide dans le circuit sous pression et/ou un organe de condensation permettant le transfert de fluide frigorigène d'une phase gazeuse vers une phase liquide, la climatisation comportant un estimateur embarqué de puissance de l'organe de compression, lequel est apte à calculer la puissance consommée par l'organe de compression par un bilan thermodynamique élevé sur l'organe de condensation en fonction du débit massique d'air et du débit massique de fluide frigorigène passant par l'organe de condensation.

Selon l'invention, l'estimateur est apte à calculer la puissance de deux modes dépendant d'un état de l'embrayage qui connecte l'organe de compression à l'arbre du moteur ou au moteur du véhicule.

Selon cette réalisation de l'invention, si l'embrayage est dans un état enclenché le calcul est effectué par l'estimateur dans un mode quasi statique basé sur le bilan thermodynamique au niveau de l'organe de condensation, ou si l'embrayage est dans un état d'enclenchement, le calcul est effectué par l'estimateur dans un mode de modèle de comportement en fonction de la température extérieure de l'air passant par l'organe de condensation.

Avantageusement, l'invention comprend au moins un moyen de mise en forme, appliqué pour faire transiter les modes de calcul l'un vers l'autre si l'état de l'embrayage a changé.

Selon l'invention, l'estimateur présente un niveau de précision inférieur à 2N.m, en mode de calcul quasi statique quand les entrées du système sont stabilisées. De plus l'estimateur présente en mode de calcul un niveau de précision de 5N.m quand le système est excité dans les phases dynamiques.

Avantageusement, selon l'invention, le débit d'air passant par l'organe de condensation est détecté par un débitmètre d'air. Le débitmètre peut être d'un type de débitmètre massique ou d'un type de débitmètre thermique.

Dans un mode particulier de réalisation, l'organe de compression est un compresseur, l'organe de condensation est un condenseur, pendant que la climatisation comprend en plus au moins un détendeur permettant de réduire la pression du fluide frigorigène dans le circuit et/ou un évaporateur amenant le fluide d'un état liquide à un état gazeux avant l'entrée dans le compresseur ou d'un état semi-liquide semi-gazeux à un état gazeux.

Selon un deuxième mode de réalisation, le compresseur est constitué à cylindrée variable.

L'invention propose aussi une méthode d'estimation de la puissance consommée par un organe de compression, comprenant au moins les étapes de procédé suivantes : détection d'un état de l'embrayage connectant l'organe de compression à un moteur de véhicule, la méthode comportant une étape de procédé de calcul de la puissance utilisant un mode modèle de comportement de la puissance en fonction de la température extérieure d'air passant par un organe de condensation si l'embrayage est en état d'enclenchement et/ou un calcul de la puissance utilisant un mode quasi statique basé sur un bilan thermodynamique élevé au niveau de l'organe de condensation, si l'embrayage est dans un état enclenché.

Selon l'invention, la méthode d'estimation de la puissance consommée par un organe de compression comprend au moins l'étape de détection d'un débit massique d'air passant par l'organe de condensation et/ou de détection d'un débit massique d'un fluide frigorigène passant par l'organe de condensation.

Les caractéristiques nommées ci-dessus peuvent être entièrement ou partiellement combinées sans s'éloigner du coeur de l'invention.

La climatisation selon l'invention offre l'avantage d'un système avec une précision de calcul élevée comparé à un système de calcul de couple, qui n'est que la simple cartographie codée dans un calculateur.

Avec le système selon l'invention, il est possible d'augmenter l'agrément de conduite d'un véhicule. Un autre avantage de l'invention se trouve dans le fait que le calcul se fait à iso périmètre technique sur des véhicules contemporains, c'est-à-dire que le calcul utilise uniquement des données déjà disponibles sur le véhicule. Des adaptations du véhicule au nouveau système de l'invention ne sont donc pas nécessaires. Le calcul du débit massique d'un fluide frigorigène, en faisant un bilan thermodynamique au niveau du condenseur, permet en plus d'économiser un capteur d'humidité de l'air extérieur ou au niveau de l'évaporateur en réduisant la complexité de montage ainsi que le prix. Ce calcul est en plus beaucoup plus réactif, permettant un meilleur contrôle en termes de rapidité.

D'autres caractéristiques et avantages de l'invention apparaîtront à l'examen de la description détaillée ci-après et des dessins annexés sur lesquels:

- Fig. 1a représente une vue d'ensemble d'un dispositif de climatisation selon l'invention,
- Fig. 1b montre un graphique expliquant les relations thermodynamiques,
- Fig. 2 montre un premier organigramme illustrant les calculs dans un estimateur selon une première réalisation de l'invention et
- Fig. 3 montre un deuxième organigramme illustrant les calculs dans un estimateur selon une deuxième réalisation de l'invention

On se réfère tout d'abord à Fig. 1a qui représente un schéma de climatisation 1 selon l'invention. Pour bien comprendre les phénomènes thermodynamiques en jeu dans le calcul de puissance liés aussi au couple du compresseur 3, le système d'une boucle froide 2 est expliqué Fig.1b. Une boucle froide 2 est composée de quatre organes principaux, en effet un organe de compression 3 qui met le fluide frigorigène en circulation et qui crée une augmentation de la pression dans le circuit, un organe de condensation 4 permettant le transfert de la phase gazeuse vers la phase liquide du fluide frigorigène, un organe de détente 5 permettant de baisser la pression dans le circuit et un organe d'évaporation 6, permettant d'évaporer le mélange liquide et gaz de fluide frigorigène pour l'amener en phase gazeuse. L'organe de compression 3 peut être un compresseur ou une turbine connue. L'organe de condensation 4 peut être un condenseur, par exemple un condenseur avec bouteille intégrée, constitué comme un échangeur situé à la face avant d'un véhicule contemporain connu. L'organe de détente 5 peut être un détendeur. L'organe d'évaporation 6 peut être un évaporateur conçu comme un échangeur. L'organe de compression 3 est attaché à un embrayage 10 qui est aussi connecté à un arbre de moteur 9. Avec l'embrayage 10 la transmission d'un couple de l'arbre de moteur 9 vers l'organe de compression 3 peut être établie ou coupée.

L'estimateur 7 reçoit des données du condenseur 4, du compresseur 3, de l'embrayage 10 et d'un débitmètre d'air 11 qui se trouve dans l'écoulement d'air. L'écoulement d'air traversant le condenseur 4 est représenté dans Fig. 1 par des flèches blanches. L'estimateur 7 peut être conçu comme un calculateur, par exemple un ordinateur ou simplement un processeur.

La circulation du fluide frigorigène dans la boucle froide 2 est représentée par des flèches noires dans Fig. 1a et la fonction de la boucle froide 2 est expliquée par la suite. Pour que la climatisation soit mise en marche, le compresseur 3 engendre une pression sur le fluide frigorigène qui est ensuite transporté vers le condenseur 4. Dans le condenseur 4, ce fluide est transféré de sa phase gazeuse vers une phase liquide. Le condenseur 4 est traversé par le fluide frigorigène et simultanément aussi par l'air extérieur. Après être sorti du compresseur 4, le fluide est sous une pression d'environ 20 bars et à une température d'environ 80°C. Sortant du condenseur 4, le fluide a une deuxième pression d'environ 19 bars et une deuxième température d'environ 50°C. Après le condenseur 4, le fluide frigorigène est pompé vers le détendeur 5. En passant le détendeur 5, la pression de fluide tombe à environ 3 bars et la température dans le fluide descend à environ 0°C.

A la sortie du détendeur 5 le fluide entre dans l'évaporateur 6 dans lequel le fluide frigorigène est transféré dans une phase gazeuse et après l'évaporateur 6 le fluide est transmis une deuxième fois par le détendeur 5. A la sortie du détendeur 5 et avant l'entrée dans le compresseur 3, le fluide frigorigène présente une quatrième pression d'environ 1,5 bars et une quatrième température d'environ 0°C.

En se référant au graphique montré sur Fig. 1b, la puissance consommée par le compresseur est environ égale au produit du débit massique de réfrigérant $\dot{m}_{fl}$ et du $\Delta$ enthalpique de compression réelle $\Delta h_{re}$.

$$p = \dot{m}_{fl} * \Delta h_{re}$$

Le Δ enthalpique de compression est calculé à partir du rendement isentropique du compresseur, qui lui-même est une fonction des basse et haute pressions BP, HP et du régime du compresseur $n_{com}$. La haute pression HP est mesurée et la basse pression BP est estimée à partir de la haute pression dans le cas d'un compresseur 3 à contrôle interne, ou à partir d'une vanne dans le cas d'un compresseur 3 à contrôle externe.

Pour réaliser un bilan thermodynamique sur le condenseur 4, il s'agit de connaître précisément l'efficacité du condenseur 4, ainsi que les données d'entrée qui sont la température de l'air externe $T_{ext}$ (air qui passe par le condenseur 4), le débit d'air $\dot{m}_{air}$ qui traverse le condenseur 4, le débit de fluide frigorigène $\dot{m}_{fl}$ qui traverse le condenseur 4 et la température de fluide frigorigène $T_{fl}$ dans le condenseur 4.

L'efficacité du condenseur est une caractéristique de l'échangeur en fonction du débit d'air et du débit de fluide frigorigène. La température de l'air extérieur est comprise comme étant la température de l'air à l'entrée du condenseur 4. Le débit d'air est le cumul de la vitesse du véhicule et de la commande des GMV (Groupe Moto Ventilateur) du véhicule.

Sur Fig. 2, un schéma de l'estimateur 7 est représenté. Outre le régime de compresseur l'estimateur 7 accueille comme donnée d'entrée la haute pression HP, la température extérieure $T_{ext}$, le régime de compresseur $n_{comp}$, la vitesse du véhicule $V_{veh}$, l'état GMV $E_{GMV}$, l'état d'embrayage $C_{emb}$ et la commande vanne $C_{van}$. Sur cette Fig. 2 apparaît également en donnée d'entrée la température du fluide (Tfl). Toutefois cette donnée d'entrée peut être supprimée en variante lorsque Tfl est calculée à partir de la haute pression HP.

Selon la variante de l'invention représentée sur Fig. 2, l'estimateur 7 a un premier élément 71 qui calcule le débit d'air $\dot{m}_{air}$ et le débit de fluide frigorigène $\dot{m}_{fl}$ en utilisant les données d'entrée.

Ce premier élément de calcul 71 fournit des données à un moyen de mise en forme 72 qui détecte sur la base de la commande d'embrayage, si l'embrayage est dans un état enclenché, dans un état débrayé ou dans un état d'enclenchement. Si le moyen de mise en forme 72 détecte que l'embrayage est dans un état débrayé, aucun des calculs suivants n'est effectué. Si le moyen de mise en forme 72 détecte que l'embrayage est dans un état enclenché, le moyen de mise en forme 72 autorise un deuxième élément de calcul 73 pour calculer la puissance consommée par le compresseur 3. Ce calcul correspond à un modèle de connaissance tel que décrit ci-dessus en référence à Fig. 1b. C'est-à-dire, que dans les phases où l'embrayage 10 est enclenché, le calcul de la puissance du compresseur 3 est effectué de manière quasi statique.

Retournons au moyen de mise en forme 72. Si ce moyen détecte que l'embrayage 10 est dans un état d'enclenchement, le moyen de mise en forme 72 autorise un troisième élément de calcul 74 pour calculer la puissance consommée par le compresseur 3. Ces phases d'enclenchement de l'embrayage 10 ont toujours lieu quand le passager dans l'habitacle d'une voiture met en marche le système de climatisation. Le calcul quasi statique correspondant à un mode d'opération du compresseur 3 instantané est basé sur le bilan thermodynamique au niveau du condenseur 4 dépendant essentiellement de la haute pression. Cette haute pression a une dynamique retardée par rapport au couple et à la puissance réellement consommée par le compresseur 3. Cet effet est principalement lié au fait que la haute pression est une résultante du couple. En effet, une augmentation du couple ou de la puissance prélevée par le compresseur 3 aura pour conséquence une variation de la haute pression. Donc, le calcul du couple ou de la puissance basée sur la haute pression est en retard par rapport au couple ou à la puissance réellement consommée par le compresseur 3. Dans des phases instantanées de la boucle froide 2, c'est à dire dans des phases dans lesquelles le compresseur 3 a un régime plutôt constant, en raison de l'état enclenché de l'embrayage 10, l'influence de ce retard sur l'estimation du couple ou de la puissance est faible.

Par contre dans les phases dynamiques, c'est à dire quand l'embrayage 10 est dans un état d'enclenchement et que le régime de compresseur 3 augmente, la mise en circulation de fluide qui en résulte étant rapide, ce n'est plus possible d'estimer le couple ou la puissance du compresseur 3 à partir de la haute pression avec une approximation suffisante. Pour cette raison, dans les phases d'enclenchement le couple ou la puissance de compresseur est estimée séparément sur la base d'un modèle de comportement en fonction de la température extérieure d'air

Le moyen de mise en forme 72 est appliqué pour que les deux calculs transitent l'un vers l'autre de façon adaptée à la situation dans laquelle la climatisation se retrouve, correspondant à l'état de l'embrayage 10 enclenché ou en cours d'enclenchement.

Selon une deuxième variante de l'estimateur 7 de l'invention, représentée Fig. 3, le moyen de mise en forme 72 peut être disposé après les éléments de calcul 73, 74. En conséquence les calculs selon le deuxième élément de calcul 73 et le troisième élément de calcul 74 sont effectués en permanence et le moyen de mise en forme permet seulement de transmettre un signal du calcul qui correspond à la situation de l'embrayage à l'extérieur de l'estimateur, par exemple vers le contrôle moteur.

Dans une troisième variante de l'invention, non représentée sur les figures, le débit d'air massique n'est pas calculé, car il est directement mesuré par un débitmètre massique et alimenté comme donnée d'entrée à l'estimateur 7.

En résumé selon l'invention, le calcul est décomposé au moins en trois parties, c'est à dire un deuxième élément de calcul 73 (calcul de puissance instantanée), un troisième élément de calcul 74 (calcul de puissance à l'enclenchement) et un moyen de mise en forme 72 du calcul de puissance. L'agencement de ces trois calculs permet à l'estimateur 7 d'atteindre un niveau de précision inférieur à 5N.m dans les phases dynamiques comme l'enclenchement ou la coupure de compresseur 3, ou encore une variation rapide du régime de rotation. Ce niveau de précision tient au fait que le calcul étant basé sur la mesure de la HP, que cette valeur de la HP résulte de la variation du couple dans les phases dynamiques, un retard apparaît entre le calcul du couple et le couple réel.

En contrepartie, dans les phases quasi statiques, stabilisées, l'utilisation du modèle du condenseur 4 permet d'atteindre des niveaux de précision inférieurs à 2N.m.

Selon l'invention les calculs de puissance prélevée par le condenseur 4 de climatisation peuvent être aussi réalisés au sein du boîtier de services. Cette puissance estimée est ensuite envoyée au contrôle moteur afin que ce dernier en tienne compte dans l'élaboration de ses consignes de couple.

En conclusion, selon l'invention un estimateur est créé avec un haut niveau de précision de fonctionnement et avec un confort de conduite élevé.

Un avantage de l'invention se trouve dans le fait qu'elle passe par un calcul de débit massique de réfrigérant $\dot{m}_{fl}$ et de débit massique d'air $\dot{m}_{air}$ dans la boucle froide ce qui rend le calcul de puissance compresseur et du couple du compresseur beaucoup plus précis car on sait facilement corréler le débit massique à un point de fonctionnement de la boucle. En distinguant les phases d'enclenchement de l'embrayage et les phases de fonctionnement enclenché de l'embrayage, les modes de calcul montrés dans l'estimateur ayant un grand impact sur l'agrément moteur augmentent la précision de l'estimateur 7.

Il doit être évident pour les hommes de l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Climatisation pour un véhicule, avec un circuit de fluide frigorigène comprenant au moins:

   - un organe de compression (3) pour mettre le fluide frigorigène en circulation et pour mettre le fluide dans le circuit sous pression;
   - un organe de condensation (4) permettant le transfert de fluide frigorigène d'une phase gazeuse vers une phase liquide; la climatisation étant **caractérisée par** un estimateur (7) embarqué de puissance d'un organe de compression (3), lequel est apte à calculer la puissance consommée par l'organe de compression (3) par un bilan thermodynamique élevé sur l'organe de condensation (4) en fonction du débit massique d'air et du débit massique de fluide frigorigène passant par l'organe de condensation (4), et en ce que l'estimateur (7) est apte à calculer la puissance de deux modes, dépendant d'un état d'un embrayage (10) qui connecte l'organe de compression (3) à l'arbre du moteur (9) ou au moteur du véhicule.

2. Climatisation, selon la revendication 1, **caractérisée en ce que** si l'embrayage (10) est dans un état enclenché, le calcul est effectué par l'estimateur (7) dans un mode quasi statique basé sur le bilan thermodynamique au niveau de l'organe de condensation (4), ou si l'embrayage (10) est dans un état d'enclenchement, le calcul est effectué par l'estimateur (7) dans un mode de modèle de comportement en fonction de la température extérieure de l'air passant par l'organe de condensation (4).

3. Climatisation, selon au moins l'une des revendications précédentes, **caractérisée par** un moyen de mise en forme (72), appliqué pour faire transiter les modes de calcul les uns vers les autres si l'état de l'embrayage (10) a changé.

4. Climatisation, selon au moins l'une des revendications précédentes, **caractérisée en ce que** l'estimateur (7) en mode de calcul quasi statique présente un niveau de précision inférieur à 2N.m, quand les entrées du système sont stabilisées.

5. Climatisation, selon au moins l'une des revendications précédentes, **caractérisée en ce que** l'estimateur (7) en mode de calcul présente un niveau de précision inférieur à 5N.m quand le système est excité dans les phases dynamiques.

6. Climatisation, selon au moins l'une des revendications précédentes, **caractérisée en ce que** le débit d'air passant par l'organe de condensation (4) est détecté par un débitmètre d'air.

7. Climatisation selon au moins l'une des revendications précédentes, **caractérisée en ce que** l'organe de compression est un compresseur (3), l'organe de condensation est un condenseur (4), et **en ce que** la climatisation comprend en plus au moins :un détendeur (5) permettant de réduire la pression du fluide frigorigène dans le circuit et un évaporateur (6) amenant le fluide d'un état liquide a un état gazeux avant l'entrée dans le compresseur (3).

**8.** Climatisation pour un véhicule selon au moins l'une des revendications précédentes, **caractérisée en ce que** le compresseur (3) est à une cylindrée variable.

**9.** Méthode pour estimer le puissance consommée par un organe de compression (3), comprenant au moins les étapes de procédé suivantes :

- détection de l'état d'un embrayage (10) connectant l'organe de compression (3) à un arbre moteur (9) d'un véhicule; **caractérisée par**
- un calcul de la puissance utilisant un mode modèle de comportement de la puissance en fonction de la température extérieure de l'air passant par un organe de condensation (4), si l'embrayage (10) est dans un état d'enclenchement, et
- un calcul de la puissance utilisant un mode quasi statique basé sur un bilan thermodynamique élevé au niveau de l'organe de condensation (4), si l'embrayage (10) est dans un état enclenché.

**10.** Méthode d'estimation de la puissance consommée par un organe de compression (3), selon revendication 9, comprenant au moins les étapes de procédé:

- détection d'un débit massique d'air passant par l'organe de condensation (4),
- détection d'un débit massique d'un fluide frigorigène passant par l'organe de condensation (4).

**Patentansprüche**

**1.** Klimaanlage für ein Fahrzeug mit einem Kältemittelkreislauf, der mindestens Folgendes umfasst:

- ein Verdichtungsorgan (3), um das Kältemittel in Zirkulation zu versetzen und das Mittel in dem Kreislauf mit Druck zu beaufschlagen;
- ein Kondensationsorgan (4), das den Transfer von Kältemittel von einer gasförmigen Phase zu einer flüssigen Phase erlaubt; wobei die Klimaanlage durch einen fahrzeugeigenen Schätzer (7) der Leistung eines Verdichtungsorgans (3) gekennzeichnet ist, der in der Lage ist, die von dem Verdichtungsorgan (3) verbrauchte Leistung durch eine hohe thermodynamische Bilanz auf dem Kondensationsorgan (4) in Abhängigkeit von dem Luftmassenstrom und dem Massenstrom an Kältemittel, der durch das Kondensationsorgan (4) durchgeht, zu berechnen, und dass der Schätzer (7) in der Lage ist, die Leistung von zwei Modi, die von einem Zustand einer Kupplung (10), die das Verdichtungsorgan (3) mit der Welle des Motors (9) oder dem Motor des Fahrzeugs verbindet, abhängen, zu berechnen.

**2.** Klimaanlage nach Anspruch 1, **dadurch gekennzeichnet, dass**, wenn die Kupplung (10) in einem eingerückten Zustand ist, die Berechnung durch den Schätzer (7) in einem quasi-statischen Modus erfolgt, der auf der thermodynamischen Bilanz im Bereich des Kondensationsorgans (4) basiert, oder, falls die Kupplung (10) in einem eingerückten Zustand ist, die Berechnung von dem Schätzer (7) in einem Verhaltensmodellmodus in Abhängigkeit von der Außentemperatur der Luft, die durch das Kondensationsorgan (4) durchgeht, erfolgt.

**3.** Klimaanlage nach mindestens einem der vorhergehenden Ansprüche, **gekennzeichnet durch** ein Formungsmittel (72), das angewandt wird, um einen Berechnungsmodus in den anderen übergehen zu lassen, falls sich der Zustand der Kupplung (10) geändert hat.

**4.** Klimaanlage nach mindestens einem der vorhergehenden Ansprüche, **dadurch gekennzeichnet, dass** der Schätzer (7) in quasi-statischem Rechenmodus ein Präzisionsniveau kleiner als 2 N.m aufweist, wenn die Eingänge des Systems stabilisiert sind.

**5.** Klimaanlage nach mindestens einem der vorhergehenden Ansprüche, **dadurch gekennzeichnet, dass** der Schätzer (7) im Rechenmodus ein Präzisionsniveau kleiner als 5 N.m aufweist, wenn das System in den dynamischen Phasen erregt ist.

**6.** Klimaanlage nach mindestens einem der vorhergehenden Ansprüche, **dadurch gekennzeichnet, dass** der Luftmassenstrom, der durch das Kondensationsorgan (4) durchgeht, von einem Luftdurchflussmesser erfasst wird.

**7.** Klimaanlage nach mindestens einem der vorhergehenden Ansprüche, **dadurch gekennzeichnet, dass** das Verdichtungsorgan ein Verdichter (3) ist, das Kondensationsorgan ein Kondensator (4) ist, und dass die Klimaanlage außerdem mindestens aufweist: einen Druckminderer (5), der es erlaubt, den Druck des Kältemittels in dem Kreislauf zu verringern, und einen Verdampfer (6), der das Mittel von einem flüssigen Zustand zu einem gasförmigen Zustand vor dem Eintreten in den Verdichter (3) überführt.

**8.** Klimaanlage für ein Fahrzeug nach mindestens einem der vorhergehenden Ansprüche, **dadurch gekennzeichnet, dass** der Verdichter (3) einen variablen Hubraum hat.

**9.** Verfahren zum Schätzen der Leistung, die von einem Verdichtungsorgan (3) verbraucht wird, das mindestens die folgenden Verfahrensschritte umfasst:

- Erfassen des Zustands einer Kupplung (10), die das Verdichtungsorgan (3) mit einer Antriebswelle (9) eines Fahrzeugs verbindet, **gekennzeichnet durch**
- eine Berechnung der Leistung unter Verwenden eines Verhaltensmodellmodus der Leistung in Abhängigkeit von der Außentemperatur der Luft, die durch ein Kondensationsorgan (4) durchgeht, falls die Kupplung (10) in einem eingerückten Zustand ist, und
- eine Berechnung der Leistung unter Verwenden eines quasi statischen Modus, der auf einer hohen thermodynamischen Bilanz im Bereich des Kondensationsorgans (4) basiert, falls die Kupplung (10) in einem eingerückten Zustand ist.

**10.** Schätzungsverfahren der von einem Verdichtungsorgan (3) verbrauchten Leistung nach Anspruch 9, das mindestens folgende Verfahrensschritte umfasst:

- Erfassen eines Luftmassenstroms, der durch das Kondensationsorgan (4) durchgeht,
- Erfassen eines Massenstroms eines Kältemittels, das durch das Kondensationsorgan (4) durchgeht.

### Claims

**1.** An air conditioning device for a vehicle, with a circuit of refrigerant fluid, including at least:

- a compression member (3) for circulating the refrigerant fluid and for pressurizing the fluid in the circuit;
- a condensation member (4) permitting the transfer of refrigerant fluid from a gaseous phase into a liquid phase; the air conditioning device being **characterized by** an on-board estimator (7) of the power of a compression member (3), which is able to calculate the power consumed by the compression member (3) by a high thermodynamic balance on the condensation member (4) as a function of the mass flow of air and of the mass flow of refrigerant fluid passing through the condensation member (4), and in that the estimator (7) is able to calculate the power of two modes, depending on a status of a clutch (10) which connects the compression member (3) to the shaft of the engine (9) or to the engine of the vehicle.

**2.** The air conditioning device, according to claim 1, **characterized in that** if the clutch (10) is an engaged state, the calculation is carried out by the estimator (7) in a quasi static mode based on the thermodynamic balance at the level of the condensation member (4), or if the clutch (10) is in a state of engaging, the calculation is carried out by the estimator (7) in a behaviour model mode as a function of the exterior temperature of the air passing through the condensation member (4).

**3.** The air conditioning device according to at least one of the preceding claims, **characterized by** a formatting means (72), applied to transit the calculation modes toward one another if the status of the clutch (10) has changed.

**4.** The air conditioning device according to at least one of the preceding claims, **characterized in that** the estimator (7) in quasi static calculation mode has a level of precision less than 2N.m, when the inputs of the system are stabilized.

**5.** The air conditioning device according to at least one of the preceding claims, **characterized in that** the estimator (7) in calculation mode has a level of precision less than 5N.m when the system is excited in the dynamic phases.

**6.** The air conditioning device according to at least one of the preceding claims, **characterized in that** the flow of air passing through the condensation member (4) is detected by an air flow meter.

**7.** The air conditioning device according to at least one of the preceding claims, **characterized in that** the compression member is a compressor (3), the condensation member is a condenser (4), and **in that** the air conditioning device includes in addition at least one pressure reducer (5), permitting the pressure of the refrigerant fluid in the circuit to be reduced, and an evaporator (6) bringing the fluid from a liquid state to a gaseous state before entry into the compressor (3).

**8.** The air conditioning device for a vehicle according to at least one of the preceding claims, **characterized in that** the compressor (3) is a variable displacement compressor.

**9.** A method for estimating the power consumed by a compression member (3), including at least the following process steps:

- detection of the status of a clutch (10) connecting the compression member (3) to a drive shaft (9) of a vehicle; **characterized by**
- a calculation of the power using a behaviour model mode of the power as a function of the exterior temperature of the air passing through a condensation member (4), if the clutch (10) is in a state of engaging, and
- a calculation of the power using a quasi static mode based on a high thermodynamic balance at the level of the condensation member (4), if the clutch (10) is in an engaged state.

**10.** The method for estimating the power consumed by a compression member (3), according to Claim 9, including at least the process steps:

- detection of a mass flow of air passing through the condensation member (4),
- detection of a mass flow of a refrigerant fluid passing through the condensation member (4).

FIG 1a

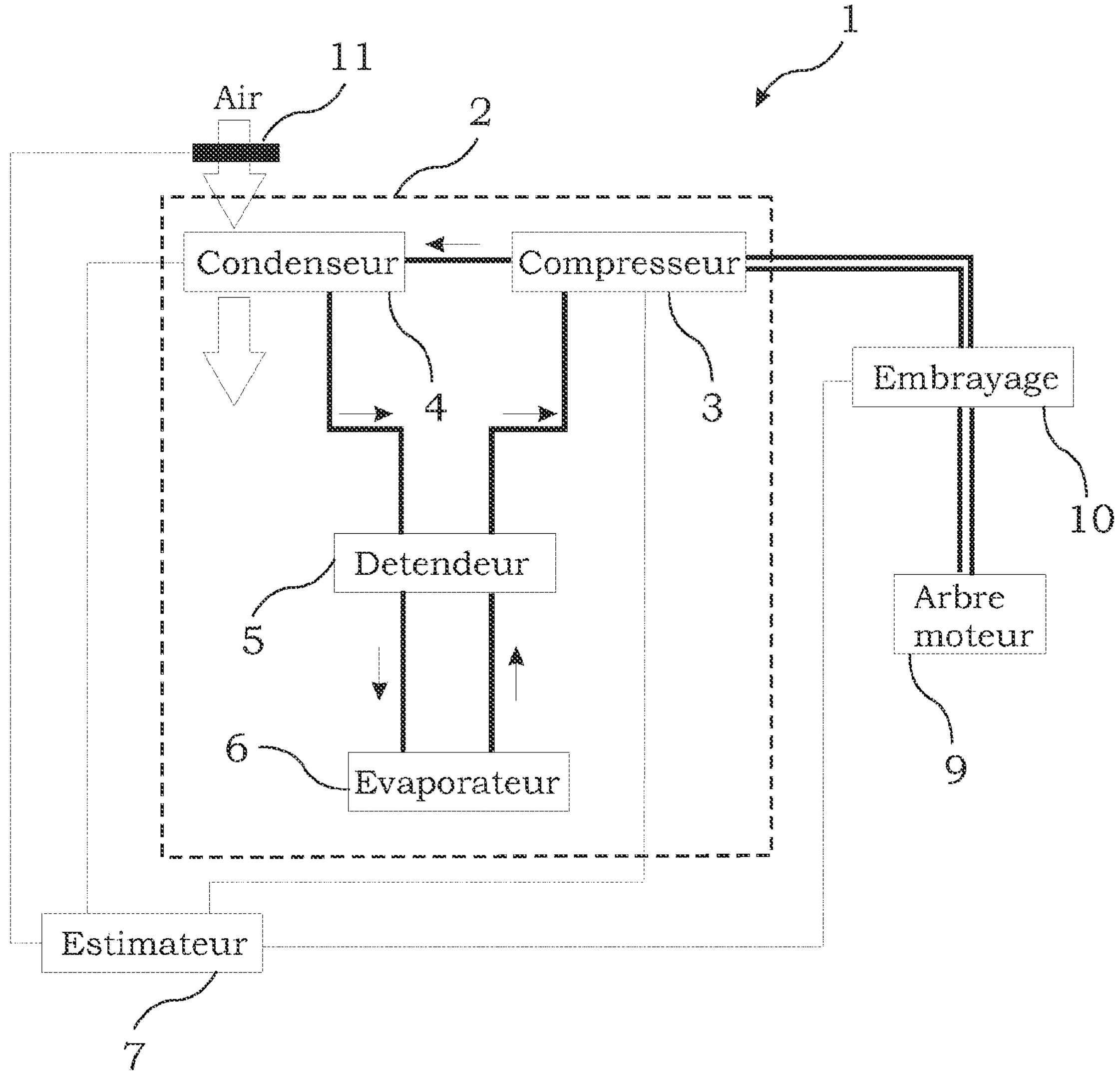
1
11
Air
2
Condenseur
Compresseur
4
3
Embrayage
10
Detendeur
5
Arbre moteur
6
Evaporateur
9
Estimateur
7

FIG 1b

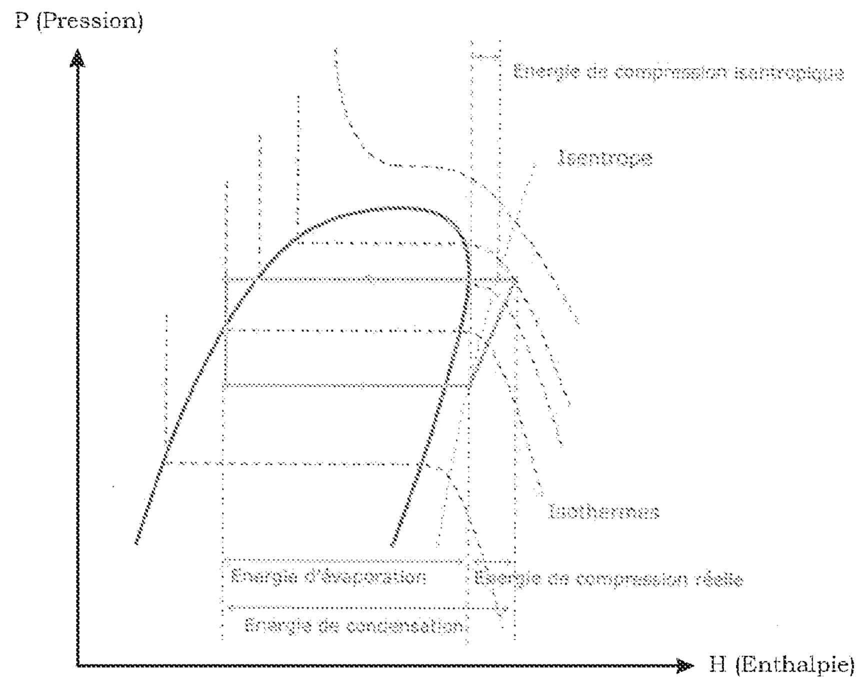
P (Pression)
Energie de compression isentropique
Isentrope
Isothermes
Energie d'évaporation
Energie de compression réelle
Energie de condensation
H (Enthalpie)

FIG 2

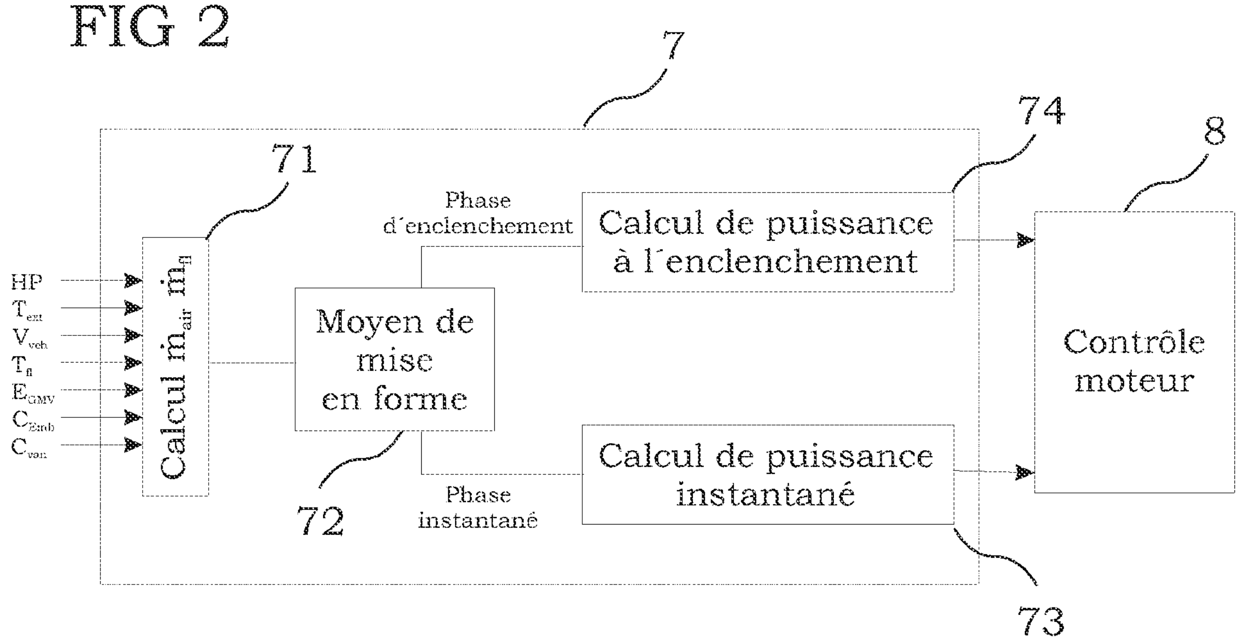
7
74
8
71
Phase d´enclenchement
Calcul de puissance à l´enclenchement
HP
$T_{ext}$
$V_{veh}$
$T_{fl}$
$E_{GMV}$
$C_{Emb}$
$C_{von}$
Calcul $\dot{m}_{air}$, $\dot{m}_{fl}$
Moyen de mise en forme
Contrôle moteur
Calcul de puissance instantané
72
Phase instantané
73

FIG 3

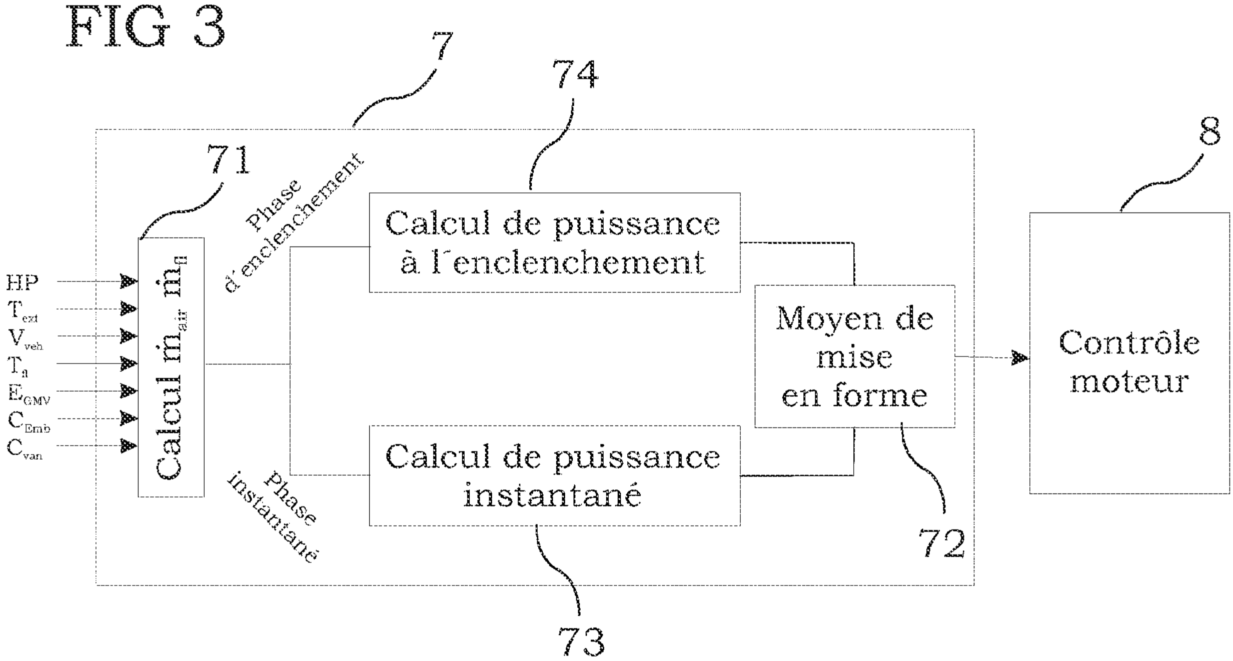
7
74
71
8
Phase
d'enclenchement
HP
$T_{ext}$
$V_{veh}$
$T_a$
$E_{GMV}$
$C_{Emb}$
$C_{van}$
Calcul $\dot{m}_{air}$ $\dot{m}_{fl}$
Calcul de puissance
à l'enclenchement
Moyen de
mise
en forme
Contrôle
moteur
Calcul de puissance
instantané
Phase
instantané
72
73

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5285649 A
- JP 2009107419 A